(19) Europäisches Patentamt / European Patent Office / Office européen des brevets

(11) **EP 4 310 935 A1**

(12) **EUROPEAN PATENT APPLICATION**
published in accordance with Art. 153(4) EPC

(43) Date of publication:
**24.01.2024 Bulletin 2024/04**

(21) Application number: **21931433.3**

(22) Date of filing: **15.03.2021**

(51) International Patent Classification (IPC):
*H01M 4/13* (2010.01)     *H01M 4/485* (2010.01)
*H01M 10/052* (2010.01)     *H01M 50/434* (2021.01)
*H01M 50/443* (2021.01)     *H01M 50/446* (2021.01)
*H01M 50/489* (2021.01)

(52) Cooperative Patent Classification (CPC):
**H01M 4/13; H01M 4/485; H01M 10/052;
H01M 50/434; H01M 50/443; H01M 50/446;
H01M 50/489**

(86) International application number:
**PCT/JP2021/010387**

(87) International publication number:
**WO 2022/195678 (22.09.2022 Gazette 2022/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **KABUSHIKI KAISHA TOSHIBA**
**Minato-ku**
**Tokyo 105-0023 (JP)**

(72) Inventors:
• **TAMAI, Suguru**
  **Tokyo 105-0023 (JP)**
• **SUGIMOTO, Kengo**
  **Tokyo 105-0023 (JP)**
• **MURASHI, Yasuaki**
  **Tokyo 105-0023 (JP)**
• **KIKUCHI, Yuma**
  **Tokyo 105-0023 (JP)**
• **WATANABE, Yoshitaro**
  **Tokyo 105-0023 (JP)**

(74) Representative: **Hoffmann Eitle**
**Patent- und Rechtsanwälte PartmbB**
**Arabellastraße 30**
**81925 München (DE)**

(54) **POSITIVE ELECTRODE, ELECTRODE GROUP, SECONDARY BATTERY, AND BATTERY PACK**

(57)     According to one embodiment, a positive electrode is provided. The positive electrode includes a positive electrode current collector, a positive electrode active material-containing layer provided on the positive electrode current collector, and a porous layer provided on at least a part of the positive electrode active material-containing layer and containing inorganic particles. A thickness of the porous layer is 3.0 um or less. A ratio X/Y, between a mode diameter X in a log differential pore volume distribution curve obtained by mercury porosimetry with respect to the positive electrode active material-containing layer and the porous layer, and a mode diameter Y in a log differential pore volume distribution curve obtained by mercury porosimetry with respect to the positive electrode active material-containing layer, satisfies the following Equation 1:

$$1.0 < X/Y < 1.5 \quad \ldots \quad (1).$$

F I G. 13

**Description**

FIELD

Embodiments of the present invention relate to a positive electrode, electrode group, secondary battery, and battery pack.

BACKGROUND

Since a lithium ion secondary battery has a characteristic of high energy density, the range of applications has been widening, from a power source for small consumer devices such as mobile phones and notebook computers to a power source for electric vehicles or hybrid electric vehicles. In such applications, output and regeneration are frequently repeated. Since this requires cutting down of energy loss, there has been a demand for a low-resistance battery. In addition, improvement in self-discharge performance is in demand, so as to suppress a voltage drop over time when a charged battery is stored for a long period of time.

As high safety can be easily ensured in the case where an insulating material such as a lithium-titanium composite oxide is used as a negative electrode active material, it has been possible to use a thinner separator. A thin separator, however, has a problem that self-discharge becomes large. An attempt to suppress self-discharge has been made through providing an inorganic-particle layer on the surface of the separator; in this case, however, deterioration of the energy density and power of the battery have become new problems.

CITATION LIST

PATENT LITERATURE 1: Japanese Patent No. 6602050
PATENT LITERATURE 2: Japanese Patent No. 6094840
PATENT LITERATURE 3: Japanese Patent No. 5035650
PATENT LITERATURE 4: Japanese Patent No. 4847861
PATENT LITERATURE 5: Japanese Patent No. 4667242
NON PATENT LITERATURE 1: Genj i Jinbo, et al., "Handbook of Microparticles", first edition, Asakura Shoten, September 1, 1991, pp. 151-152.
NON PATENT LITERATURE 2: Sohachiro Hayakawa, ed. "Powder Physical Property Measurement Methods", first edition, Asakura Shoten, Oct. 15, 1973, pp. 257-259.

SUMMARY

TECHNICAL PROBLEM

An object of the present invention is to provide a positive electrode that can realize a secondary battery that has a low resistance and attains suppressed self-discharge, an electrode group that includes this positive electrode, and a battery pack that includes this secondary battery.

SOLUTION TO PROBLEM

According to one embodiment, a positive electrode is provided. The positive electrode includes a positive electrode current collector, a positive electrode active material-containing layer provided on the positive electrode current collector, and a porous layer provided on at least a part of the positive electrode active material-containing layer and containing inorganic particles. A thickness of the porous layer is 3.0 $\mu$m or less. A ratio X/Y, between a mode diameter X in a log differential pore volume distribution curve obtained by mercury porosimetry with respect to the positive electrode active material-containing layer and the porous layer, and a mode diameter Y in a log differential pore volume distribution curve obtained by mercury porosimetry with respect to the positive electrode active material-containing layer, satisfies the following Equation 1:

$$1.0 < X/Y < 1.5 \quad \ldots \quad (1).$$

According to another embodiment, an electrode group is provided. The electrode group includes the positive electrode according to the embodiment, a negative electrode, and a separator that is in contact with the porous layer and is interposed between the positive electrode and the negative electrode.

According to another embodiment, a secondary battery is provided. The secondary battery includes an electrode group according to the embodiment, and an electrolyte.

According to another embodiment, a battery pack is provided. The battery pack includes the secondary battery according to the embodiment.

BRIEF DESCRIPTION OF THE DRAWINGS

FIG. 1 is a cross-sectional view schematically showing an example of a positive electrode according to an embodiment.

FIG. 2 is a cross-sectional view schematically showing another example of the positive electrode according to the embodiment.

FIG. 3 is a cross-sectional view schematically showing another example of the positive electrode according to the embodiment.

FIG. 4 is a plan view showing the positive electrode in FIG. 3 when observed from another direction.

FIG. 5 is a cross-sectional view schematically showing an example of an electrode group according to the embodiment.

FIG. 6 is a cross-sectional view schematically showing an example of a secondary battery according to the embodiment.

FIG. 7 is an enlarged cross-sectional view of section A of the secondary battery shown in FIG. 6.

FIG. 8 is a partially cutaway perspective view schematically showing another example of the secondary battery according to the embodiment.

FIG. 9 is an enlarged cross-sectional view of section B of the secondary battery shown in FIG. 8.

FIG. 10 is a perspective view schematically showing an example of a battery module according to the embodiment.

FIG. 11 is an exploded perspective view schematically showing an example of a battery pack according to the embodiment.

FIG. 12 is a block diagram showing an example of an electric circuit of the battery pack shown in FIG. 11.

FIG. 13 is a graph showing a log differential pore volume distribution curve according to an example.

DETAILED DESCRIPTION

Hereinafter, embodiments will be described with reference to the drawings. The same structures will be referenced by the same numbers and symbols throughout the embodiments, and overlapping descriptions will be omitted. Each drawing is a schematic drawing to aid understanding of the embodiments and the descriptions thereof. Shapes, dimensions, and ratios presented therein may be different from those of the actual apparatus; however, they may be appropriately changed as a design choice in consideration of the following descriptions and publicly-known techniques.

When a porous layer containing inorganic particles is provided on the surface of a separator, it is difficult to perform pressing for increasing the density of the porous layer. This is because pressing would damage the separator making it practically unable to prevent a short circuit between the positive and negative electrodes. On the other hand, when a porous layer is provided on an active material-containing layer, it is possible to press the porous layer with a predetermined load. However, when the pressing is performed with a high load, the density of the porous layer may be excessively increased. When the density of the porous layer is excessively increased, the movement of lithium ions passing through the porous layer in the thickness direction is hindered, and thus the battery resistance tends to increase.

(First Embodiment)

According to a first embodiment, a positive electrode is provided. The positive electrode includes a positive electrode current collector, a positive electrode active material-containing layer provided on the positive electrode current collector, and a porous layer provided on at least a part of the positive electrode active material-containing layer and containing inorganic particles. A thickness of the porous layer is 3.0 $\mu$m or less. A ratio X/Y, between a mode diameter X in a log differential pore volume distribution curve obtained by mercury porosimetry with respect to the positive electrode active material-containing layer and the porous layer, and a mode diameter Y in a log differential pore volume distribution curve obtained by mercury porosimetry with respect to the positive electrode active material-containing layer, satisfies the following Equation 1:

$$1.0 < X/Y < 1.5 \quad . \quad . \quad . \quad (1).$$

In the positive electrode according to the embodiment, a porous layer including more pores having a larger pore diameter as compared to the positive electrode active material-containing layer is stacked on at least a part of the positive electrode active material-containing layer. Specifically, as shown in the above Equation 1, the mode diameter X in the log differential pore volume distribution curve obtained by mercury intrusion porosimetry for the positive electrode active material-containing layer and the porous layer is larger than the mode diameter Y in the log differential pore volume distribution curve obtained by mercury intrusion porosimetry for the positive electrode active material-containing layer. Therefore, the porous layer is less likely to hinder the movement of lithium ions. However, if the mode diameter X is too large as compared with the mode diameter Y, the effect of suppressing self-discharge between the positive and negative electrodes cannot be expected.

From the viewpoint of suppressing self-discharge, in the positive electrode according to the embodiment, a ratio X/Y of a mode diameter X in a log differential pore volume distribution curve obtained by mercury porosimetry for the positive electrode active material-containing layer and the porous layer, and a mode diameter Y in a log differential pore volume distribution curve obtained by mercury porosimetry for the positive electrode active material-containing layer is less than 1.5. Namely, the ratio X/Y is greater than 1.0 and less than 1.5. Since the ratio X/Y is less than 1.5, passage of an excessive amount of lithium ions through the porous layer can be suppressed. That is, the positive electrode that satisfies Equation 1 does not excessively increase the battery resistance while suppressing self-discharge. The ratio X/Y is preferably in a range of 1.20 or more and less than 1.50, and more preferably within a range of 1.20 or more and 1.40 or less.

The mode diameter X can be determined from a log differential pore volume distribution curve obtained by performing mercury porosimetry on the positive electrode active material-containing layer and the porous layer, with a method described later. The mode diameter X is a pore diameter corresponding to the position of the peak top of peak PX having the highest abundance ratio in the log differential pore volume distribution curve. The mode diameter Y, on the other hand, can be determined from a log differential pore volume distribution curve obtained by performing mercury porosimetry on the positive electrode active material-containing layer, with a method described later. The mode diameter Y is a pore diameter corresponding to the position of the peak top of peak PY having the highest abundance ratio in the log differential pore volume distribution curve.

In contrast to the mode diameter Y, which is determined by measurement of the positive electrode active material-containing layer alone, the mode diameter X is determined by measurement of two layers in which a porous layer is additionally stacked on the electrode active material-containing layer. Thus, by comparing the mode diameter X and the mode diameter Y, comparison can be mainly made regarding the difference in pore size distribution stemming from the porous layer.

When the ratio X/Y is 1.0 or less, for example, the pore volume in the porous layer is insufficient, or the abundance ratio of pores having a relatively large diameter in the porous layer is insufficient. Thus, there is a possibility that the movement of lithium ions between the positive electrode and the negative electrode would be rate-limiting in the porous layer. When the ratio X/Y is 1.5 or more, for example, the pore volume in the porous layer is excessive, or the abundance ratio of pores having a relatively large diameter in the porous layer is excessive. Thus, the battery voltage tends to decrease with time, which is not preferable.

The mode diameter X is, for example, in a range of 0.45 $\mu$m or more and 6.20 $\mu$m or less. When the mode diameter X is excessively large, there tends to be many voids in the porous layer, and thus, there is a possibility that the self-discharge performances will be deteriorated. When the mode diameter X is excessively small, the battery resistance may increase. However, in evaluating the superiority or inferiority of the self-discharge performances and the battery resistance, evaluation should not be made for the mode diameter X alone, and should rather be made based on the ratio X/Y of the mode diameter X to the mode diameter Y.

The mode diameter Y is, for example, in a range of 0.36 $\mu$m or more and less than 0.45 $\mu$m. When the mode diameter Y is excessively large, there tends to be many voids in the active material-containing layer. Therefore, there is a tendency for the electrode density to decrease, whereby the volume energy density decreases. When the mode diameter Y is excessively small, there tends to be few voids in the active material-containing layer. Thereby, the electrode density becomes high and the amount of the electrolyte solution in the vicinity of the active material becomes insufficient; as a consequence, the output power tends to deteriorate, and on top of that, the density of the porous layer may be difficult to increase.

The porous layer included in the positive electrode according to the embodiment has a thin thickness of 3.0 $\mu$m or less. When the thickness of the porous layer containing the inorganic particles exceeds 3.0 $\mu$m, the migration distance of lithium ions between the positive electrode and the negative electrode becomes long, and the increase in battery resistance becomes remarkable, which is not preferable. By having the thickness of the porous layer be 3.0 $\mu$m or less, an effect of suppressing an increase in battery resistance and suppressing self-discharge can be obtained. The thickness of the porous layer may be 0.5 $\mu$m or more. The thickness of the porous layer may be 0.5 $\mu$m or more and 2.5 $\mu$m or less, or 1.0 $\mu$m or more and 2.0 $\mu$m or less. Even in the case where the thickness of the porous layer is extremely small, as long as the ratio X/Y satisfies Equation 1, a secondary battery with low resistance and suppressed self-discharge can be realized.

As mentioned above, when a porous layer is formed on a separator in the conventional manner, it has been difficult to subject the porous layer to pressing, and thus, it has been difficult to form a porous layer that is a thin film having a thickness of 3.0 $\mu$m or less and having a high density. In the positive electrode according to the embodiment, since the porous layer is stacked on the positive electrode active material-containing layer, a predetermined load can be applied to the porous layer. As a result, it is possible to realizes a porous layer that has a pore diameter distribution satisfying Equation 1 and that also has a small thickness of 3.0 $\mu$m or less.

Since the positive electrode is more apt to undergo thermal runaway as compared to the negative electrode, a battery having higher safety can be realized by providing the porous layer on the positive electrode active material-containing layer. However, the porous layer may also be provided on the negative electrode active material-containing layer.

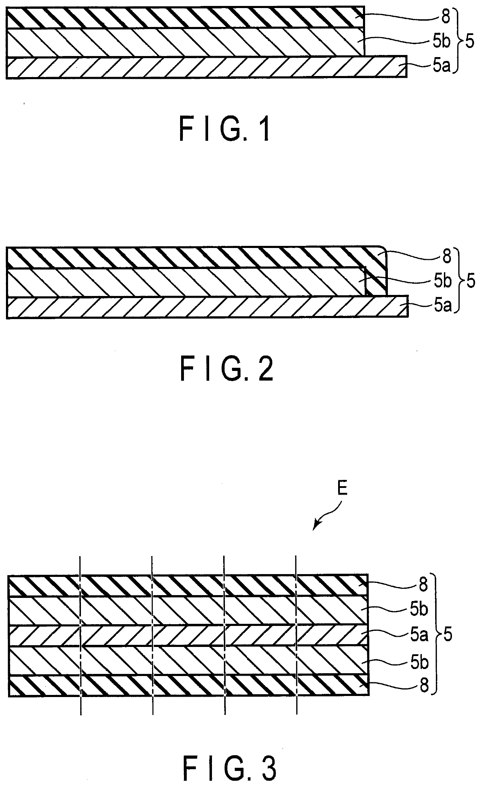

An example of the positive electrode according to the embodiment will be described with reference to FIGS. 1 to 3. FIG. 1 is a cross-sectional view schematically showing an example of the positive electrode. FIG. 2 is a cross-sectional view schematically showing another example of the positive electrode. FIG. 3 is a cross-sectional view schematically showing yet another example of the positive electrode. As shown in FIG. 1, the positive electrode 5 includes a positive electrode current collector 5a, a positive electrode active material-containing layer 5b provided on the positive electrode current collector 5a, and a porous layer 8 provided on at least a part of the positive electrode active material-containing layer 5b. The positive electrode current collector 5a may include a portion on a surface of which the positive electrode active material-containing layer 5b is not formed. This portion can serve as a positive electrode current collecting tab.

As shown in FIG. 3, in the positive electrode 5, the positive electrode current collector 5a and the positive electrode active material-containing layer 5b may be stacked in this order on both surfaces of the positive electrode current collector 5a.

The porous layer 8 may or may not cover the entire principal surface of the positive electrode active material-containing layer 5b. The coverage of the principal surface of the positive electrode active material-containing layer 5b with the porous layer 8 is, for example, 30% or more, preferably 50% or more, and more preferably 70% or more. This coverage may be 100%. The porous layer 8 may further cover not only the principal surface but also the side surface of the positive electrode active material-containing layer 5b. For example, as shown in FIG. 2, the porous layer 8 may span from the principal surface of the positive electrode active material-containing layer 5b to the surface of the positive electrode current collecting tab, thereby further covering the side surface of the positive electrode active material-containing layer 5b. In this case, the porous layer 8 further covers a part of the positive electrode current collector 5a. Since the porous layer 8 has an insulating property, in a case where the porous layer 8 further covers the side surface of the positive electrode active material-containing layer 5b, a short circuit between the positive and negative electrodes can be made less likely to occur.

The average particle size (D50) of the inorganic particles contained in the porous layer is, for example, in the range of 0.1 $\mu$m to 3.0 $\mu$m. In order to uniformly achieve a thin thickness of 3.0 $\mu$m or less over the entire area in the in-plane direction, the average particle size (D50) of the inorganic particles is preferably within the range of 0.1 $\mu$m to 2.0 $\mu$m. A method for measuring the thickness of the porous layer will be described later.

The porous layer contains at least inorganic particles. The porous layer may further contain a binder. The proportion of the mass of the inorganic particles accounting for the mass of the porous layer is, for example, in a range of 50 mass% to 100 mass%, preferably in a range of 70 mass% to 99 mass%. When the proportion is within the preferable range, a thin porous layer can be uniformly formed on the active material-containing layer. When this proportion is excessively high, the flexibility of the porous layer is insufficient, and thus there is a possibility that defects such as cracks are likely to occur. The proportional content of the inorganic particles contained in the porous layer can be analyzed by a differential thermal analysis (DTA).

As the inorganic particles, those having insulating properties can be used without limitation. The inorganic particles may be, for example, metal oxides. Examples of the inorganic particles include aluminum oxide such as alumina, titanium oxide, magnesium oxide, zinc oxide, lithium titanate, titanium hydroxide, barium titanate, iron oxide, silicon oxide, aluminum hydroxide, gibbsite, boehmite, bayerite, zirconium oxide, magnesium hydroxide, silica, barium titanate, lithium tetraborate, lithium tantalate, mica, silicon nitride, aluminum nitride, and zeolite. Inorganic particles other than those described above may be used, as long as they have an insulating function. As the inorganic particles, just one species of compound may be used, or a mixture of two or more species of compounds may be used.

As the binder, a binder usable in the positive electrode active material-containing layer, which is described later, can be used. In the present specification and claims, the binder that may be contained in the porous layer can also be referred to as a first binder.

The thickness of the positive electrode active material-containing layer formed on one surface of the positive electrode current collector is, for example, within the range of 5 $\mu$m to 100 $\mu$m, and preferably within the range of 10 $\mu$m to 50 $\mu$m. If the thickness of the positive electrode active material-containing layer is within this range, the migration distance of lithium ions can be shortened. As a result, the battery resistance can be reduced and excellent power can be realized.

The positive electrode active material-containing layer can contain a positive electrode active material, and optionally an electro-conductive agent and a binder. The positive electrode active material-containing layer preferably does not contain the inorganic particles. For example, the positive electrode active material-containing layer may be composed of the positive electrode active material, electro-conductive agent, and binder. In this case, an increase in battery resistance can be suppressed as compared to the case where the active material-containing layer further contains inorganic particles.

As the positive electrode active material, for example, an oxide or a sulfide may be used. The positive electrode may singly include one species of compound as the positive electrode active material, or alternatively, include two or more species of compounds in combination. Examples of the oxide and sulfide include compounds capable of having Li and Li ions be inserted and extracted.

Examples of such compounds include manganese dioxide ($MnO_2$), iron oxides, copper oxides, nickel oxides, lithium manganese composite oxides (e.g., $Li_xMn_2O_4$ or $Li_xMnO_2$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese cobalt composite oxides (e.g., $Li_xMn_yCo_{1-y}O_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium phosphates having an olivine structure (e.g., $Li_xFePO_4$; $0 < x \leq 1$, $Li_xFe_{1-y}Mn_yPO_4$; $0 < x \leq 1$, $0 < y < 1$, and $Li_xCoPO_4$; $0 < x \leq 1$), iron sulfate ($Fe_2(SO_4)_3$), vanadium oxides (e.g., $V_2O_5$), and lithium nickel cobalt manganese composite oxide ($Li_xNi_{1-y-z}Co_yMn_zO_2$; $0 < x \leq 1$, $0 < y < 1$, $0 < z < 1$, $y + z < 1$).

Among the above, examples of compounds more preferable as the positive electrode active material include lithium manganese composite oxides having a spinel structure (e.g., $Li_xMn_2O_4$; $0 < x \leq 1$), lithium nickel composite oxides (e.g., $Li_xNiO_2$; $0 < x \leq 1$), lithium cobalt composite oxides (e.g., $Li_xCoO_2$; $0 < x \leq 1$), lithium nickel cobalt composite oxides (e.g., $Li_xNi_{1-y}Co_yO_2$; $0 < x \leq 1$, $0 < y < 1$), lithium manganese nickel composite oxides having a spinel structure (e.g., $Li_xMn_{2-y}Ni_yO_4$; $0 < x \leq 1$, $0 < y < 2$), lithium manganese cobalt composite oxide (e.g., $Li_xMn_yCo_{1-y}O_2$; $0 < x \leq 1$, $0 < y < 1$), lithium iron phosphates (e.g., $Li_xFePO_4$; $0 < x \leq 1$), and lithium nickel cobalt manganese composite oxides ($Li_xNi_{1-y-z}Co_yMn_zO_2$; $0 < x \leq 1$, $0 < y < 1$, $0 < z < 1$, $y + z < 1$). The positive electrode potential can be made high by using these positive electrode active materials.

The primary particle diameter of the positive electrode active material is preferably from 100 nm to 1 um. The positive electrode active material having a primary particle size of 100 nm or more is easy to handle during industrial production. In the positive electrode active material having a primary particle size of 1 um or less, in-solid diffusion of lithium ions can proceed smoothly.

The specific surface area of the positive electrode active material is preferably from 0.1 $m^2$/g to 10 $m^2$/g. With the positive electrode active material having a specific surface area of 0.1 $m^2$/g or more, sufficient sites for inserting and extracting Li ions can be secured. The positive electrode active material having a specific surface area of 10 $m^2$/g or less is easy to handle during industrial production, and can secure a good charge and discharge cycle performance.

The binder is added to fill gaps among the dispersed positive electrode active material and also to bind the positive electrode active material with the positive electrode current collector. Examples of the binder include polytetrafluoroethylene (PTFE), polyvinylidene fluoride (PVdF), fluororubber, polyacrylate compounds, imide compounds, carboxymethyl cellulose (CMC), and salts of CMC. One of these may be used as the binder, or alternatively, two or more may be used in combination as the binder. In the present specification and claims, the binder contained in the positive electrode active material-containing layer can also be referred to as a second binder.

The electro-conductive agent is added to improve current collection performance and to suppress the contact resistance between the positive electrode active material and the positive electrode current collector. Examples of electro-conductive agent include carbonaceous substances such as vapor grown carbon fiber (VGCF), carbon black such as acetylene black, and graphite. One of these may be used as the electro-conductive agent, or two or more may be used in combination as the electro-conductive agent. The electro-conductive agent may be omitted.

In the positive electrode active material-containing layer, the positive electrode active material and binder are preferably blended in proportions of 80% by mass to 98% by mass, and 2% by mass to 20% by mass, respectively.

When the amount of the binder is 2% by mass or more, sufficient electrode strength can be achieved. The binder may serve as an electrical insulator. Thus, when the amount of the binder is 20% by mass or less, the amount of insulator in the electrode is reduced, and thereby the internal resistance can be decreased.

When an electro-conductive agent is added, the positive electrode active material, binder, and electro-conductive agent are preferably blended in proportions of 77% by mass to 95% by mass, 2% by mass to 20% by mass, and 3% by mass to 15% by mass, respectively.

When the amount of the electro-conductive agent is 3% by mass or more, the above-described effects can be expressed. By setting the amount of the electro-conductive agent to 15% by mass or less, the proportion of electro-conductive agent that contacts the electrolyte can be made low. When this proportion is low, decomposition of electrolyte can be reduced during storage under high temperatures.

The positive electrode current collector is preferably an aluminum foil, or an aluminum alloy foil containing one or more selected from the group consisting of Mg, Ti, Zn, Ni, Cr, Mn, Fe, Cu, and Si.

The thickness of the aluminum foil or aluminum alloy foil is preferably from 5 $\mu$m to 20 $\mu$m, and more preferably 15 $\mu$m or less. The purity of the aluminum foil is preferably 99% by mass or more. The amount of transition metal such as iron, copper, nickel, or chromium contained in the aluminum foil or aluminum alloy foil is preferably 1% by mass or less.

Herein after, the mercury porosimetry on the positive electrode, measuring method of the layer thicknesses of each layer, and method of measuring the average particle diameter (D50) of the inorganic particles will be described.

<Mercury Porosimetry>

First, a battery to be measured is prepared. A battery having a discharge capacity of 80% or more of the nominal capacity is prepared for the battery to be measured. That is, an excessively deteriorated battery is not to be subjected to measurement.

Next, the prepared battery is discharged until the open-circuit voltage becomes 2.0 to 2.2 V. The discharged battery is then transferred into an argon-filled glove box in which the dew point of the internal atmosphere is -70 °C. The battery is opened in such a glove box. The electrode group is taken out from the cut-open battery. If the taken-out electrode group includes a positive electrode lead and a negative electrode lead, the positive electrode lead and the negative electrode lead are cut, taking care so as to not allow the positive and negative electrodes to short-circuit.

Next, the electrode group is disassembled to separate the positive electrode, the negative electrode, and the separator. The positive electrode thus obtained is washed using diethyl carbonate as a solvent. During the washing, the members obtained by the separation are completely immersed in the diethyl carbonate solvent and left in that state for 60 minutes.

After washing, the positive electrode is subjected to vacuum drying. In the vacuum drying, the pressure is reduced from atmospheric pressure to -97 kpa or further in a 25°C environment, and this state is maintained for 10 minutes. For the positive electrode taken out by such a procedure, measurement is performed by the following method.

The positive electrode is cut, so as to prepare a sample A in a state where the positive electrode active material-containing layer and the porous layer are stacked, and a sample B with the porous layer on the positive electrode active material-containing layer removed. The samples are each cut out into a size of 25 mm $\times$ 25 mm.

As a measuring apparatus, Shimadzu Autopore 9520 model or an apparatus having equivalent functions thereto is used. Each sample is folded and placed in a measurement cell, then measured under the conditions of an initial pressure of 20 kPa (corresponds to about 3 psia and a pore diameter of about 60 $\mu$m). For each of sample A and sample B, an average value of three samples is taken as a measurement result. The mode diameter X can be determined from the pore diameter distribution curve for sample A. The mode diameter Y can be determined from the pore diameter distribution curve for sample B.

In organizing data, a pore specific surface area is calculated assuming the pore shape as being a cylindrical shape.

The analysis principle of a mercury intrusion porosimetry is based on Washburn's equation (B).

$$D = -4\gamma \cos\theta/P \qquad \text{Equation (B)}$$

In the equation, P is a pressure applied, D is a pore diameter, $\gamma$ is the surface tension of mercury (480 dyne $\cdot$cm$^{-1}$), and $\theta$ is the contact angle between mercury and the wall surface of the pore, which is 140°. Since $\gamma$ and $\theta$ are constants, the relationship between the applied pressure P and the pore diameter D can be obtained from the Washburn's equation, and the pore diameter and the volume distribution thereof can be derived by measuring the mercury intrusion volume at that time. For the specifics on the measurement method, principle, and the like, see "Handbook of Microparticles", Genj i Jimbo et al, Asakura Shoten (1991), "Powder Physical Property Measurement Methods", Sohachiro Hayakawa, Asakura Shoten (1978), and the like.

<Method of Measuring Layer Thickness>

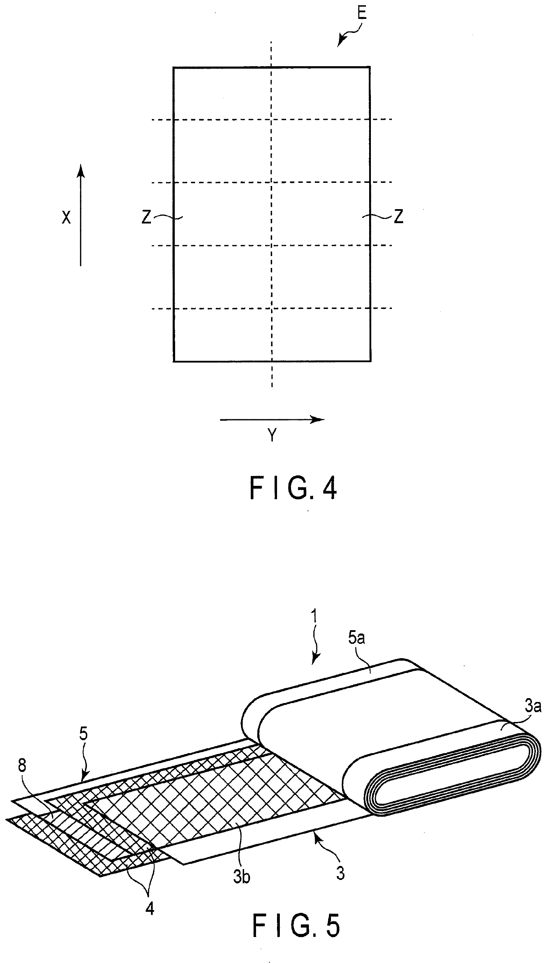

A method of measuring layer thicknesses of the positive electrode active material-containing layer and the porous layer will be described with reference to FIG. 3 and FIG. 4. The layer thickness is determined through observation of a cross-section of the positive electrode cut along the stacking direction of the positive electrode active material-containing layer and the porous layer, for example, the cross-section illustrated in FIG. 3, with a scanning electron microscope (SEM). By performing energy dispersive X-ray spectroscopy (EDX) in addition to the observation using an SEM, it is possible to determine whether or not the particles included in the porous layer are inorganic particles.

As shown in FIG. 4, a 5 cm portion of the electrode E is selected in a direction of choice (hereinafter referred to as an "X direction"). The electrode E shown in FIG. 4 shows a state in which the electrode E is observed in a direction parallel to the stacking direction. The electrode E is divided into five parts in a direction perpendicular to the X direction (hereinafter referred to as a "Y direction"), thereby obtaining five samples. One of the five samples is schematically shown in FIG. 4. Among the obtained five samples, a sample Z located at the center in the X direction is taken as a measurement sample. The width of the sample Z is divided into two in the Y direction, thereby obtaining two cross-sections. FIG. 3 shows an example of the cross-sections. Either one of the two obtained cross-sections is observed by an SEM, and the distance from the point of contact between the positive electrode active material-containing layer 5b and the positive electrode current collector 5a to the surface of the positive electrode active material-containing layer 5b not in contact with the positive electrode current collector 5a is measured at positions that divide the range observed at 1000 times magnification into five equal parts (for example, the four positions indicated by dashed-dotted lines in FIG. 3), and an average of the obtained measured values at the four positions is determined as a thickness of the positive electrode active material-containing layer. Similarly, the distance from the point of contact between the porous layer 8 and the positive electrode active material-containing layer 5b to the surface of the porous layer 8 not in contact with the positive electrode active material-containing layer 5b is measured, and an average of the measured values of four points is determined as a thickness of the porous layer.

<Particle Size Distribution Measurement>

The dried positive electrode is prepared according to the method described in the foregoing section of the mercury porposimetry. The porous layer is torn off from the positive electrode, and dispersed in a solvent such as N-methyl-2-pyrrolidone (NMP). If the porous layer contains a binder, the inorganic particles are separated alone using a centrifuge. The separated inorganic particles are dispersed in NMP, and a particle size distribution measurement is performed using a laser diffraction distribution measuring apparatus, such as Microtrac MT3100II manufactured by MicrotracBEL Corp. In this way, the average particle size (D50) of the inorganic particles contained in the porous layer can be determined.

<Method for Producing Positive Electrode>

Next, an example of a method for manufacturing the positive electrode according to the embodiment will be described. The production method described below is merely an example, and the production method is not particularly limited as long as a positive electrode satisfying Equation 1 regarding the ratio X/Y and having a porous layer with a thickness of 3.0 um or less can be obtained.

First, a positive electrode active material, an electro-conductive agent, and a binder are suspended in an appropriate solvent to prepare a slurry (hereinafter referred to as a "first slurry") . Next, the first slurry is applied to one face or both faces of the current collector. The coating film on the current collector is dried to form a positive electrode active material-containing layer before pressing. Thereafter, the positive electrode active material-containing layer can be formed by subjecting the current collector and the positive electrode active material-containing layer before pressing formed thereon to pressing.

Subsequently, the inorganic particles and the binder are dispersed in an appropriate solvent to prepare a slurry (hereinafter referred to as a "second slurry"). The second slurry is applied onto at least the positive electrode active material-containing layer. The second slurry may also be applied to a part of the surface of the positive electrode current collecting tab of the positive electrode current collector. The porous layer can be formed by drying the applied second slurry and then pressing the dried second slurry.

The mode diameters X and Y can be adjusted by changing the viscosity, the coating amount (weight per unit area), and the pressing pressure of the first slurry and/or the second slurry, and the average particle size of the inorganic particles, etc. For example, the ratio X/Y can be decreased by either performing a low-load pressing when forming the positive electrode active material-containing layer or performing a high-load pressing when forming the porous layer on the positive electrode active material-containing layer. For example, the ratio X/Y can be increased by either performing a high-load pressing when forming the positive electrode active material-containing layer or performing a low-load pressing when forming the porous layer on the positive electrode active material-containing layer. Alternatively, when inorganic particles having a relatively small average particle diameter are used, the pore diameter included in the porous layer tends to be small. In other words, the mode diameter Y tends to be small.

The above-described method is a method in which the first slurry for forming the positive electrode active material-containing layer is applied and dried, the applied film is pressed, and then the porous layer is formed. However, the positive electrode according to the embodiment may be formed by applying and drying the second slurry without performing pressing after applying and drying the first slurry, and performing pressing collectively on the coating film of the first slurry and the coating film of the second slurry. Also in this case, the ratio X/Y can be adjusted by, for example, changing the press load.

According to the first embodiment described above, a positive electrode is provided. The positive electrode includes a positive electrode current collector, a positive electrode active material-containing layer provided on the positive electrode current collector, and a porous layer provided on at least a part of the positive electrode active material-containing layer and containing inorganic particles. A thickness of the porous layer is 3.0 um or less. A ratio X/Y, between a mode diameter X in a log differential pore volume distribution curve obtained by mercury porosimetry with respect to the positive electrode active material-containing layer and the porous layer, and a mode diameter Y in a log differential pore volume distribution curve obtained by mercury porosimetry with respect to the positive electrode active material-containing layer, satisfies the following Equation 1:

$$1.0 < X/Y < 1.5 \quad . \quad . \quad . \quad (1).$$

The positive electrode according to the embodiment satisfies Equation 1 and can therefore realize a low battery resistance, while suppressing self-discharge with the porous layer containing inorganic particles.

(Second Embodiment)

The electrode group according to the second embodiment includes the positive electrode according to the first embodiment, a negative electrode, and a separator. The separator is in contact with the porous layer of the positive electrode, and is interposed between the positive electrode and the negative electrode. The electrode group may include one or plural positive electrodes, one or plural negative electrodes, and one or plural separators. The electrode group according to the embodiment may be a wound electrode group or a stacked electrode group.

Hereinafter, details of the negative electrode and separator of the electrode group will be described. As the positive electrode, that described in the first embodiment can be used.

(1) Negative Electrode

The negative electrode may include a negative electrode current collector and a negative electrode active material-containing layer supported on one or both faces of the negative electrode current collector. The porous layer described in the first embodiment may be stacked onto at least a part of the negative electrode active material-containing layer. The negative electrode active material-containing layer can contain a negative electrode active material, and optionally an electro-conductive agent and a binder.

As the material for the negative electrode current collector, there may be used a material which is electrochemically stable at the negative electrode potential range when alkali metal ions are inserted or extracted. The negative electrode current collector is preferably, for example, a zinc (Zn) foil, aluminum foil, or an aluminum alloy including at least one element selected from magnesium (Mg), titanium (Ti), zinc, manganese (Mn), iron (Fe), copper (Cu), and silicon (Si).

The negative electrode current collector may be of another form such as a porous body or a mesh. The thickness of the negative electrode current collector is preferably 5 $\mu$m to 30 $\mu$m. The current collector having such a thickness can maintain balance between the strength and weight reduction of the electrode.

The negative electrode current collector may include a portion where the negative electrode active material-containing layer is not formed on a surface thereof. This portion can serve as a negative electrode current collecting tab.

The negative electrode active material includes at least one selected from the group consisting of a carbon material, silicon, a silicon oxide, and a titanium-containing oxide. The negative electrode active material may include one among these materials, or include two or more among them. Examples of the carbon material include artificial graphite, natural graphite, and spindle-shaped graphite obtained by consolidating natural graphite and coating it with carbon.

The titanium-containing oxide include, for example, at least one selected from the group consisting of an oxide of titanium, a lithium titanium composite oxide, a niobium titanium composite oxide, and a sodium niobium titanium composite oxide. When the negative electrode active material includes the titanium-containing oxide, the safety of the secondary battery is superior, and thus, the porous layer can be made thinner. As a result, the power can be improved.

The oxide of titanium includes, for example, a titanium oxide having a monoclinic structure, a titanium oxide having a rutile structure, and a titanium oxide having an anatase structure. For the titanium oxide of each crystal structure, the composition before charge can be expressed as $TiO_2$, and the composition after charge can be expressed as $Li_xTiO_2$

(x satisfies $0 \leq x \leq 1$). In addition, the structure of titanium oxide having a monoclinic structure before charge can be expressed as $TiO_2(B)$.

The lithium titanium oxide includes, for example, a lithium titanium oxide having a spinel structure (e.g., general formula $Li_{4+x}Ti_5O_{12}$ (x satisfies $-1 \leq x \leq 3$)), a lithium titanium oxide having a ramsdellite structure (e.g., $Li_{2+x}Ti_3O_7$, x satisfies $-1 \leq x \leq 3$), $Li_{1+x}Ti_2O_4$ ($0 \leq x \leq 1$), $Li_{1.1+x}Ti_{1.8}O_4$ ($0 \leq x \leq 1$), $Li_{1.07+x}Ti_{1.86}O_4$ ($0 \leq x \leq 1$), $Li_xTiO_2$ ($0 < x \leq 1$), and the like. The lithium titanium oxide may be a lithium titanium composite oxide having a dopant introduced.

The niobium titanium composite oxide has, for example, a monoclinic crystal structure. The monoclinic niobium-titanium composite oxide is, for example, at least one selected from the group consisting of a composite oxide represented by general formula $Li_xTi_{1-y}M1_yNb_{2-z}M2_zO_{7+\delta}$, and a composite oxide represented by general formula $Li_xTi_{1-y}M3_{y+z}Nb_{2-z}O_{7-\delta}$. Here, M1 is at least one selected from the group consisting of Zr, Si, and Sn. M2 is at least one selected from the group consisting of V, Ta, and Bi. M3 is at least one selected from the group consisting of Mg, Fe, Ni, Co, W, Ta, and Mo. Each subscript in the composition formula satisfies $0 \leq x \leq 5$, $0 \leq y < 1$, $0 \leq z < 2$, and $-0.3 \leq \delta \leq 0.3$.

Specific examples of the monoclinic niobium-titanium composite oxides include $Nb_2TiO_7$, $Nb_2Ti_2O_9$, $Nb_{10}Ti_2O_{29}$, $Nb_{14}TiO_{37}$, and $Nb_{24}TiO_{62}$. The monoclinic niobium-titanium composite oxide may be a substituted niobium-titanium composite oxide in which at least a part of Nb and/or Ti is substituted with a dopant. Examples of substituting elements are Na, K, Ca, Co, Ni, Si, P, V, Cr, Mo, Ta, Zr, Mn, Fe, Mg, B, Pb, and Al. The substituted niobium-titanium composite oxide may include one substituting element, or include two or more substituting elements.

The sodium titanium composite oxide includes, for example, an orthorhombic Na-containing niobium titanium composite oxide represented by general formula $Li_{2+v}Na_{2-w}M1_xTi_{6-y-z}Nb_yM2_zO_{14+\delta}$ ($0 \leq v \leq 4$, $0 \leq w < 2$, $0 \leq x < 2$, $0 \leq y < 6$, $0 \leq z < 3$, and $-0.5 \leq \delta \leq 0.5$, M1 includes at least one selected from Cs, K, Sr, Ba, and Ca, M2 includes at least one selected from Zr, Sn, V, Ta, Mo, W, Fe, Co, Mn, and Al).

As the negative electrode active material, the oxide of titanium of anatase structure, oxide of titanium of monoclinic structure, lithium titanium oxide of spinel structure, niobium titanium composite oxides, or mixtures thereof is preferably used. When these oxides are used as the negative electrode active material, for example, by combining with lithium manganese composite oxide as positive electrode active material, a high electromotive force can be obtained.

The negative electrode active material is contained in the negative electrode active material-containing layer in a form of, for example, particles. The negative electrode active material particles may be primary particles, secondary particles that are agglomerates of primary particles, or a mixture of singular primary particles and secondary particles. The shapes of the particles are not particularly limited and may be, for example, spherical, elliptical, flat, or fibrous.

The average particle size (diameter) of the primary particles of the negative electrode active material is preferably 3 μm or less, and more preferably 0.01 um to 1 um. The average particle size (diameter) of the secondary particles of the negative electrode active material is preferably 30 um or less, and more preferably 5 μm to 20 um.

Each of the primary particle size and the secondary particle size means a particle size with which a volume integrated value becomes 50% in a particle size distribution obtained by a laser diffraction particle size distribution measuring apparatus. As the laser diffraction particle size distribution measuring apparatus, Shimadzu SALD-300 is used, for example. For measurement, luminous intensity distribution is measured 64 times at intervals of 2 seconds. As a sample used when performing the particle size distribution measurement, a dispersion obtained by diluting the negative electrode active material particles with N-methyl-2-pyrrolidone such that the concentration is 0.1% by weight to 1% by weight is used. Alternatively, used as a measurement sample is one obtained by dispersing 0.1 g of a negative electrode active material in 1 ml to 2 ml of distilled water containing a surfactant.

The electro-conductive agent is mixed as needed to raise current collection performance and suppress the contact resistance between the active material and the current collector. The binder has a function of binding the active material, the electro-conductive agent, and the current collector.

Examples of the electro-conductive agent include carbonaceous materials such as acetylene black, Ketjen black, carbon nanofiber, carbon nanotube, graphite, and coke. The electro-conductive agent may be of one species, or two species or more may be used in mixture.

Examples of the binder include polytetrafluoro ethylene (PTFE), polyvinylidene fluoride (PVdF), fluororubber, styrene-butadiene rubber, polyacrylate compounds, imide compounds, carboxymethyl cellulose (CMC), and salts of CMC. One of these may be used as the binder, or alternatively, two or more may be used in combination as the binder.

The blending proportions of the negative electrode active material, electro-conductive agent and binder in the negative electrode active material-containing layer are preferably in the ranges of 70% by mass to 95% by mass of the negative electrode active material, 3% by mass to 20% by mass of the electro-conductive agent, and 2% by mass to 10% by mass of the binder. With the blending proportion of the electro-conductive agent being 3% by mass or more, the current collecting performance of the negative electrode active material-containing layer can be improved. With the blending proportion of the binder being 2% by mass or more, sufficient electrode strength can be obtained, and with the proportion being 10% by mass or less, insulating parts in the electrode can be diminished.

The negative electrode can be obtained by, for example, the following method. First, the active material, electro-conductive agent and binder are suspended in a suitable solvent to prepare a slurry. Next, the slurry is applied onto one surface or both surfaces of the current collector. The coating of slurry applied onto the current collector is dried, thereby forming an active material-containing layer. Thereafter, pressing is performed for the current collector and the active material-containing layer formed thereon. As the active material-containing layer, the mixture of the active material, electro-conductive agent, and binder may be formed into pellets and used, as well.

The density of the negative electrode active material-containing layer (not including the current collector) is preferably 1.8 g/cm$^3$ to 2.8 g/cm$^3$. The negative electrode, in which the density of the negative electrode active material-containing layer is within this range, is excellent in terms of energy density and holding property of the electrolyte. The density of the negative electrode active material-containing layer is more preferably 2.1 g/cm$^3$ to 2.6 g/cm$^3$.

(2) Separator

The separator may be made of, for example, a porous film or synthetic resin nonwoven fabric including polyethylene (PE), polypropylene (PP), cellulose, or polyvinylidene fluoride (PVdF). In view of safety, a porous film made of polyethylene or polypropylene is preferred. This is because at a certain temperature, such a porous film melts and can thereby shut off current.

Although the thickness of the separator is not particularly limited, an excessively thick separator is not preferable because the battery resistance increases. The thickness of the separator is, for example, 5 μm to 30 μm, and preferably in a range of 5 μm to 20 μm. The thickness of the separator may be within a range of 10 um to 20 um. Since the positive electrode included in the electrode group according to the embodiment has the predefined porous layer, excellent self-discharge performance can be exhibited even when the thickness of the separator is 20 μm or less.

An example of the electrode group according to the embodiment is described with reference to FIG. 5. FIG. 5 is a partially unwound perspective view of an example of the electrode group. The flat electrode group 1 is one where a positive electrode 5 and a negative electrode 3 have been wound into a flat shape, with a separator 4 interposed therebetween. The positive electrode 5 is the positive electrode described in the first embodiment. Here, the positive electrode 5 includes a band-shaped positive electrode current collector 5a made of, for example, metal foil, a positive electrode current collecting tab formed of one end of the positive electrode current collector parallel to the long side, a positive electrode active material-containing layer 5b (not shown) formed on the positive electrode current collector excluding the portion that is the positive electrode current collecting tab, and a porous layer 8 provided on top of the positive electrode active material-containing layer 5b. In FIG. 5, the positive electrode active material-containing layer 5b is not shown, for being formed between the positive electrode current collector 5a and the porous layer 8.

On the other hand, the negative electrode 3 includes a band-shaped negative electrode current collector 3a made of, for example, metal foil, a negative electrode current collecting tab formed of one end of the negative electrode current collector parallel to the long side, and a negative electrode active material-containing layer 3b formed on the negative electrode current collector 3a excluding at least the portion that is the negative electrode current collecting tab.

The positive electrode 5, separator 4, and negative electrode 3 are wound such that the positions of the positive electrode 5 and negative electrode 3 are misaligned so that the positive electrode current collector 5a protrudes from the separator 4 in a direction along the winding axis of the electrode group 1, and the negative electrode current collector 3a protrudes from the separator 4 in the opposite direction. As a result of this winding, in the electrode group 1, as shown in FIG. 5, the spirally wound positive electrode current collecting tab protrudes from one side, and the spirally wound negative electrode current collecting tab protrudes from the other side.

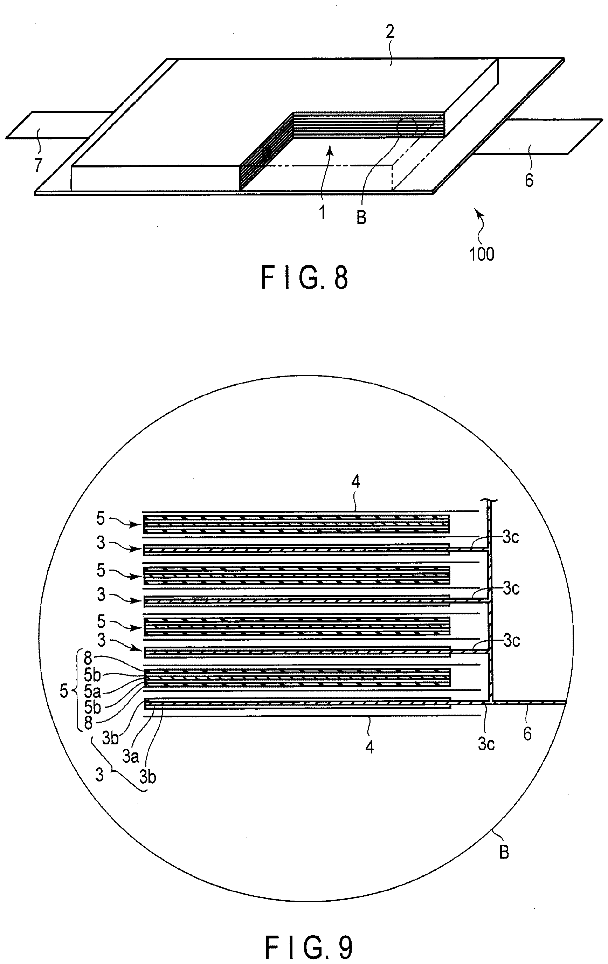

Plural positive electrodes 5, plural separators 4, and plural negative electrodes 3 may be further stacked on a negative electrode 3 in the order of separator 4, positive electrode 5, separator 4, and negative electrode 3. Namely, the electrode group 1 may be a stacked electrode group, in which the negative electrode 3 and the positive electrode 5 are alternately and repeatedly stacked with separators 4 interposed therebetween. An example thereof is shown in FIGS. 8 and 9, which will be discussed later in more detail. FIG. 8 and FIG. 9 are diagrams schematically showing one mode of a secondary battery. If the electrode group 1 includes plural positive electrodes 5, not all positive electrodes 5 need to have any porous layer 8, and at least one positive electrode 5 having the porous layer 8 is sufficient.

The electrode group according to the second embodiment includes the positive electrode according to the first embodiment. Thus, the electrode group according to the second embodiment can realize a secondary battery with low resistance and suppressed self-discharge.

(Third Embodiment)

According to a third embodiment, provided is a secondary battery including the electrode group according to the second embodiment and an electrolyte. The secondary battery may be, for example, a lithium ion secondary battery or a nonaqueous electrolyte secondary battery including a nonaqueous electrolyte.

The electrolyte may be held in the electrode group. The secondary battery may further include a container member that houses the electrode group and the electrolyte. The secondary battery may further include a negative electrode terminal electrically connected to the negative electrode and a positive electrode terminal electrically connected to the positive electrode.

Hereinafter, the electrolyte, container member, negative electrode terminal and positive electrode terminal will be described. Note, that as the positive electrode, negative electrode and separator of the electrode group, those mentioned above may be used.

(A) Electrolyte

As the electrolyte, for example, a liquid nonaqueous electrolyte or gel nonaqueous electrolyte may be used. The liquid nonaqueous electrolyte is prepared by dissolving an electrolyte salt as solute in an organic solvent. Note, that the liquid nonaqueous electrolyte as described herein indicates a nonaqueous electrolyte that is liquid at normal temperature (for example, 20°C) and 1 atmosphere. The concentration of electrolyte salt is preferably from 1 mol/L to 3 mol/L, and more preferably from 0.5 mol/L to 2.5 mol/L.

Examples of the electrolyte salt include lithium salts such as lithium perchlorate ($LiClO_4$), lithium hexafluorophosphate ($LiPF_6$), lithium tetrafluoroborate ($LiBF_4$), lithium hexafluoroarsenate ($LiAsF_6$), lithium hexafluoroantimonate ($LiSbF_6$), lithium trifluoromethanesulfonate ($LiCF_3SO_3$), lithium bistrifluoromethylsulfonylimide $[LiN(CF_3SO_2)_2]$, lithium bispentafluoroethanesulfonylimide $[Li (C_2F_5SO_2)_2N]$, lithium bisoxalateborate $[LiB (C_2O_4)_2]$, lithium difluoro(trifluoro-2-oxide-2-trifluoro-methylpropionato(2-)-0,0)borate $[LiBF_2(OCOOC (CF_3)_2]$, and mixtures thereof. The electrolyte salt is preferably resistant to oxidation even at a high potential, and most preferably $LiBF_4$ or $LiPF_6$.

Examples of the organic solvent include cyclic carbonates such as propylene carbonate (PC), ethylene carbonate (EC), and vinylene carbonate (VC); linear carbonates such as diethyl carbonate (DEC), dimethyl carbonate (DMC), and methyl ethyl carbonate (MEC); cyclic ethers such as tetrahydrofuran (THF), 2-methyl tetrahydrofuran (2-MeTHF), and dioxolane (DOX) ; linear ethers such as dimethoxy ethane (DME) and diethoxy ethane (DEE); γ-butyrolactone (GBL), acetonitrile (AN), and sulfolane (SL) . These organic solvents may be used singularly or as a mixed solvent.

The gel nonaqueous electrolyte is prepared by obtaining a composite of a liquid nonaqueous electrolyte and a polymeric material. Examples of the polymeric material include polyvinylidene fluoride (PVdF), polyacrylonitrile (PAN), polyethylene oxide (PEO), and mixtures thereof.

Alternatively, other than the liquid nonaqueous electrolyte and gel nonaqueous electrolyte, an ambient temperature molten salt (ionic melt) including lithium ions, a polymer solid electrolyte, an inorganic solid electrolyte, or the like may be used as the electrolyte.

The ambient temperature molten salt (ionic melt) indicates compounds among organic salts made of combinations of organic cations and anions, which are able to exist in a liquid state at ambient temperature (15°C to 25°C). The ambient temperature molten salt includes an ambient temperature molten salt which exists alone as a liquid, an ambient temperature molten salt which becomes a liquid upon mixing with an electrolyte salt, an ambient temperature molten salt which becomes a liquid when dissolved in an organic solvent, and mixtures thereof. In general, the melting point of the ambient temperature molten salt used in secondary batteries is 25°C or below. The organic cations generally have a quaternary ammonium framework.

The polymer solid electrolyte is prepared by dissolving the electrolyte salt in a polymeric material, and solidifying it.

The inorganic solid electrolyte is a solid substance having Li ion conductivity.

(B) Container Member

As the container member, for example, a container made of laminate film or a container made of metal may be used.

The thickness of the laminate film is, for example, 0.5 mm or less, and preferably 0.2 mm or less.

As the laminate film, used is a multilayer film including multiple resin layers and a metal layer sandwiched between the resin layers. The resin layer may include, for example, a polymeric material such as polypropylene (PP), polyethylene (PE), nylon, or polyethylene terephthalate (PET). The metal layer is preferably made of aluminum foil or an aluminum alloy foil, so as to reduce weight. The laminate film may be formed into the shape of a container member, by heat-sealing.

The wall thickness of the metal container is, for example, 1 mm or less, more preferably 0.5 mm or less, and still more preferably 0.2 mm or less.

The metal container is made, for example, of aluminum or an aluminum alloy. The aluminum alloy preferably contains elements such as magnesium, zinc, or silicon. If the aluminum alloy contains a transition metal such as iron, copper, nickel, or chromium, the content thereof is preferably 100 ppm by mass or less.

The shape of the container member is not particularly limited. The shape of the container member may be, for example, flat (thin), prismatic, cylindrical, coin-shaped, or button-shaped. The container member may be appropriately selected depending on battery size and use of the battery.

(C) Negative Electrode Terminal

The negative electrode terminal may be made of a material that is electrochemically stable at the Li insertion-extraction potential of the negative electrode active materials mentioned above, and having electrical conductivity. Specific examples of the material for the negative electrode terminal include copper, nickel, stainless steel, aluminum, and aluminum alloy containing at least one selected from the group consisting of Mg, Ti, Zn, Mn, Fe, Cu, and Si. Aluminum or aluminum alloy is preferred as the material for the negative electrode terminal. The negative electrode terminal is preferably made of the same material as the negative electrode current collector, in order to reduce the contact resistance between the negative electrode terminal and the negative electrode current collector.

(D) Positive Electrode Terminal

The positive electrode terminal may be made of, for example, a material that is electrically stable in the potential range of 3 V to 4.5 V (vs. Li/Li$^+$) relative to the oxidation-reduction potential of lithium, and having electrical conductivity. Examples of the material for the positive electrode terminal include aluminum and an aluminum alloy containing one or more selected from the group consisting of Mg, Ti, Zn, Mn, Fe, Cu, and Si. The positive electrode terminal is preferably made of the same material as the positive electrode current collector, in order to reduce contact resistance between the positive electrode terminal and the positive electrode current collector.

Next, the secondary battery according to the third embodiment will be more concretely described with reference to the drawings.

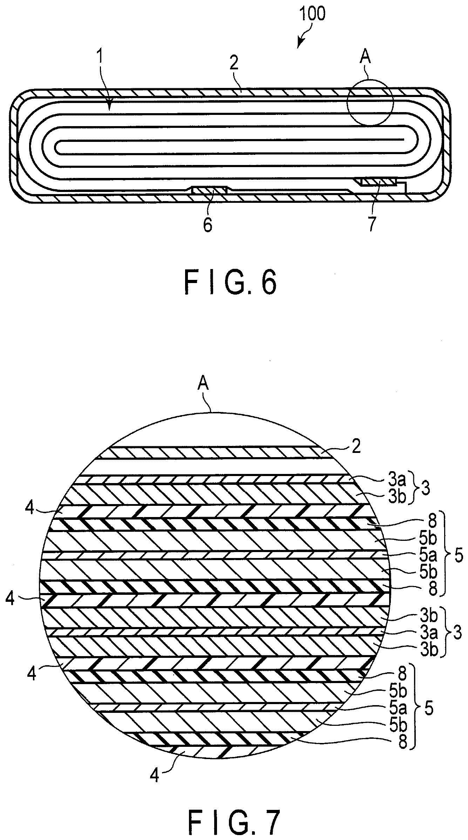

FIG. 6 is a cross-sectional view schematically showing an example of the secondary battery according to the third embodiment. FIG. 7 is an enlarged cross-sectional view of section A of the secondary battery shown in FIG. 6.

The secondary battery 100 shown in FIG. 6 and FIG. 7 includes a bag-shaped container member 2 shown in FIG. 6, an electrode group 1 shown in FIG. 6 and FIG. 7, and an electrolyte, which is not shown. The electrode group 1 and the electrolyte are housed in the bag-shaped container member 2. The electrolyte (not shown) is held in the electrode group 1.

The bag-shaped container member 2 is made of a laminate film including two resin layers and a metal layer sandwiched therebetween.

As shown in FIG. 6, the electrode group 1 is a wound electrode group in a flat form. The wound electrode group 1 in a flat form includes a negative electrode 3, a separator 4, and a positive electrode 5, as shown in FIG. 7. The separator 4 is sandwiched between the negative electrode 3 and the positive electrode 5.

The negative electrode 3 includes a negative electrode current collector 3a and a negative electrode active material-containing layer 3b. At the portion of the negative electrode 3 positioned outermost among the wound electrode group 1, the negative electrode active material-containing layer 3b is formed only on an inner surface of the negative electrode current collector 3a, as shown in FIG. 7. For the other portions of the negative electrode 3, negative electrode active material-containing layers 3b are formed on both surfaces of the negative electrode current collector 3a.

The positive electrode 5 includes a positive electrode current collector 5a, positive electrode active material-containing layers 5b formed on both surfaces of the positive electrode current collector 5a, and porous layers 8 formed on at least parts on the positive electrode active material-containing layers 5b.

As shown in FIG. 6, a negative electrode terminal 6 and positive electrode terminal 7 are positioned in vicinity of the outer peripheral edge of the wound electrode group 1. The negative electrode terminal 6 is connected to a portion of the negative electrode current collector 3a positioned outermost. The positive electrode terminal 7 is connected to a portion of the positive electrode current collector 5a positioned outermost. The negative electrode terminal 6 and the positive electrode terminal 7 extend out from an opening of the bag-shaped container member 2. A thermoplastic resin layer is provided on the inner surface of the bag-shaped container member 2, and the opening is sealed by thermal fusion of the resin layer.

The secondary battery according to the third embodiment is not limited to the secondary battery of the structure shown in FIG. 6 and FIG. 7, and may be, for example, a secondary battery of a structure as shown in FIG. 8 and FIG. 9.

FIG. 8 is a partially cut-out perspective view schematically showing another example of the secondary battery according to the second embodiment. FIG. 9 is an enlarged cross-sectional view of section B of the secondary battery shown in FIG. 8.

The secondary battery 100 shown in FIG. 8 and FIG. 9 includes an electrode group 1 shown in FIG. 8 and FIG. 9, a container member 2 shown in FIG. 8, and an electrolyte, which is not shown. The electrode group 1 and electrolyte are housed in the container member 2. The electrolyte is held in the electrode group 1.

The container member 2 is made of a laminate film including two resin layers and a metal layer sandwiched between the resin layers.

As shown in FIG. 8, the electrode group 1 is a stacked electrode group. The stacked electrode group 1 has a structure in which negative electrodes 3 and positive electrodes 5 are alternately stacked with separator(s) 4 sandwiched therebetween.

The electrode group 1 includes plural negative electrodes 3. Each of the negative electrodes 3 includes the negative electrode current collector 3a and the negative electrode active material-containing layers 3b supported on both surfaces of the negative electrode current collector 3a. The electrode group 1 further includes plural positive electrodes 5. Each of the positive electrodes 5 includes the positive electrode current collector 5a, the positive electrode active material-containing layers 5b supported on both surfaces of the positive electrode current collector 5a, and porous layers 8 formed on at least a part on the positive electrode active material-containing layers 5b.

The negative electrode current collector 3a of each of the negative electrodes 3 includes at one end, a portion 3c where the negative electrode active material-containing layer 3b is not supported on either surface. This portion 3c serves as a negative electrode current collecting tab. As shown in FIG. 8, the portions 3c serving as negative electrode current collecting tabs do not overlap the positive electrodes 5. The plural negative electrode current collecting tabs (portions 3c) are electrically connected to the strip-shaped negative electrode terminal 6. A tip of the strip-shaped negative electrode terminal 6 is drawn outside from the container member 2.

Although not shown, the positive electrode current collector 5a of each of the positive electrodes 5 includes at one end, a portion where the positive electrode active material-containing layer 5b is not supported on either surface. This portion serves as a positive electrode current collecting tab. Like the negative electrode current collecting tabs (portions 3c), the positive electrode current collecting tabs do not overlap the negative electrodes 3. Further, the positive electrode current collecting tabs are located on the opposite side of the electrode group 1 with respect to the negative electrode current collecting tabs (portions 3c). The positive electrode current collecting tabs are electrically connected to the strip-shaped positive electrode terminal 7. A tip of the strip-shaped positive electrode terminal 7 is located on the opposite side relative to the negative electrode terminal 6 and drawn outside from the container member 2.

The secondary battery according to the third embodiment includes the electrode group according to the second embodiment. Thus, the secondary battery according to the third embodiment has low resistance and exhibits excellent self-discharge performance.

(Fourth Embodiment)

According to a fourth embodiment, a battery module is provided. The battery module according to the fourth embodiment includes plural of secondary batteries according to the third embodiment.

In the battery module according to the fourth embodiment, each of the single-batteries may be arranged to be electrically connected in series or in parallel, or may be arranged in combination of in-series connection and in-parallel connection.

An example of the battery module according to the fourth embodiment will be described next, with reference to the drawings.

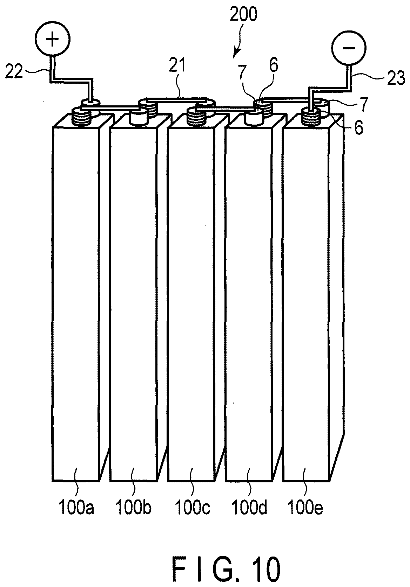

FIG. 10 is a perspective view schematically showing an example of the battery module according to the third embodiment. The battery module 200 shown in FIG. 10 includes five single-batteries 100a to 100e, four bus bars 21, a positive electrode-side lead 22, and a negative electrode-side lead 23. Each of the five single-batteries 100a to 100e is the secondary battery according to the second embodiment.

The bus bar 21 connects, for example, a negative electrode terminal 6 of one single-battery 100a and a positive electrode terminal 7 of the single-battery 100b positioned adjacent. In such a manner, five single-batteries 100 are thus connected in series by the four bus bars 21. That is, the battery module 200 shown in FIG. 10 is a battery module of five-in-series connection.

As shown in FIG. 10, The positive electrode terminal 7 of the single-battery 100a positioned on the left end among the five single-batteries 100a to 100e is connected to the positive electrode-side lead 22 for external connection. The negative electrode terminal 6 of the single-battery 100e positioned on the right end among the five single-batteries 100a to 100e is connected to the negative electrode-side lead 23 for external connection.

The battery module according to the fourth embodiment includes the secondary battery according to the third embodiment. Accordingly, the battery module has low resistance and exhibits excellent self-discharge performance.

(Fifth Embodiment)

According to a fifth embodiment, a battery pack is provided. The battery pack includes the battery module according to the fourth embodiment. The battery pack may include a single secondary battery according to the third embodiment, in place of the battery module according to the fourth embodiment.

The battery pack according to the fifth embodiment may further include a protective circuit. The protective circuit has a function to control charging and discharging of the secondary battery. Alternatively, a circuit included in equipment where the battery pack serves as a power source (for example, electronic devices, vehicles, and the like) may be used as the protective circuit for the battery pack.

In addition, the battery pack according to the fifth embodiment may further include an external power distribution terminal. The external power distribution terminal is configured to externally output current from the secondary battery, and to input external current into the secondary battery. In other words, when the battery pack is used as a power source, the current is provided out via the external power distribution terminal. When the battery pack is charged, the charging current (including regenerative energy of motive force of vehicles such as automobiles) is provided to the battery pack via the external power distribution terminal.

Next, an example of a battery pack according to the fifth embodiment will be described with reference to the drawings.

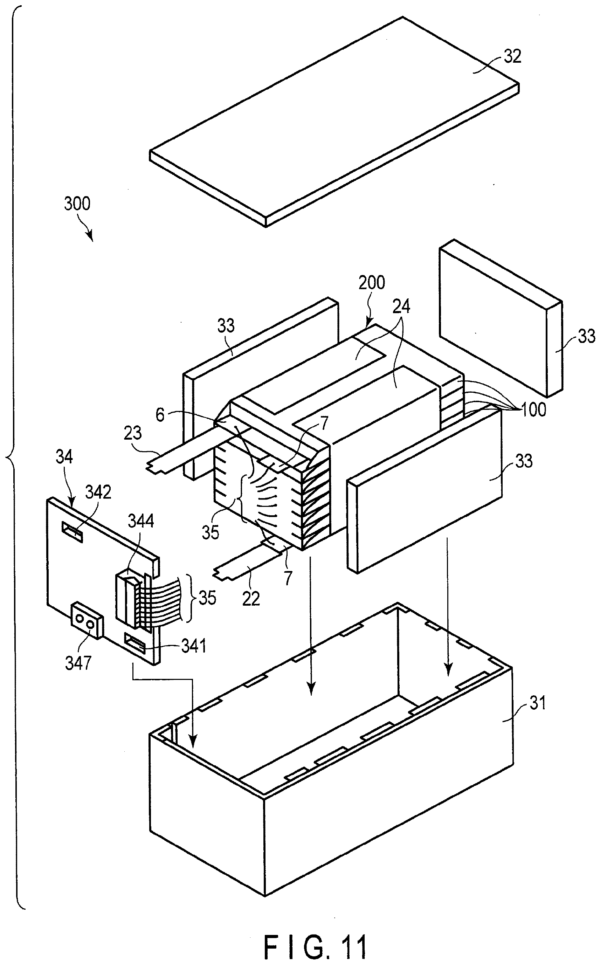

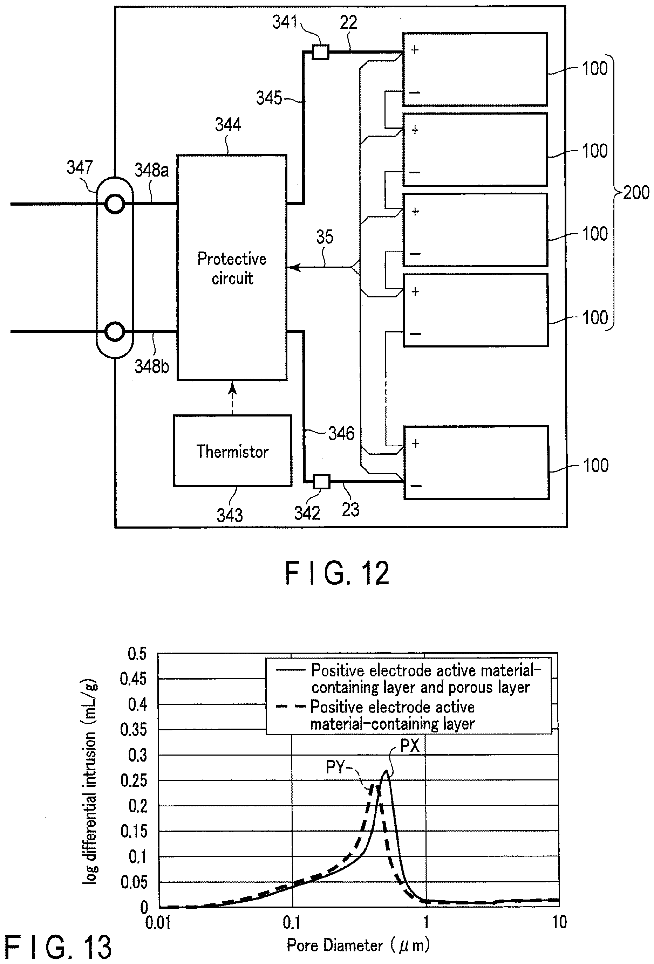

FIG. 11 is an exploded perspective view schematically showing an example of the battery pack according to the fifth embodiment. FIG. 12 is a block diagram showing an example of an electric circuit of the battery pack shown in FIG. 11.

A battery pack 300 shown in FIG. 11 and FIG. 12 includes a housing container 31, a lid 32, protective sheets 33, a battery module 200, a printed wiring board 34, wires 35, and an insulating plate, which is not shown.

The housing container 31 shown in FIG. 11 is a prismatic bottomed container having a rectangular bottom surface. The housing container 31 is configured to be capable of housing the protective sheets 33, the battery module 200, the printed wiring board 34, and the wires 35. The lid 32 has a rectangular shape. The lid 32 covers the housing container 31 to house the battery module 200 and such. The housing container 31 and the lid 32 are provided with openings, connection terminals, or the like for connection to an external device or the like, though not illustrated.

The battery module 200 includes plural single-batteries 100, a positive electrode side lead 22, a negative electrode side lead 23, and adhesive tape(s) 24.

A single-battery 100 has the structure shown in FIG. 6 and FIG. 7. At least one of the plural single-batteries 100 is a secondary battery according to the third embodiment. The plural single-batteries 100 are stacked such that the negative electrode terminals 6 and the positive electrode terminals 7, which extend outside, are directed toward the same direction. The plural single-batteries 100 are electrically connected in series, as shown in FIG. 12. The plural single-batteries 100 may alternatively be electrically connected in parallel, or connected in a combination of in series connection and in parallel connection. If the plural single-batteries 100 are connected in parallel, the battery capacity increases as compared to a case in which they are connected in series.

The adhesive tape(s) 24 fastens the plural single-batteries 100. The plural single-batteries 100 may be fixed using a heat shrinkable tape in place of the adhesive tape (s) 24 . In this case, the protective sheets 33 are arranged on both side surfaces of the battery module 200, and after the heat shrinkable tape is wound around the battery module 200 and protective sheets 33, the heat shrinkable tape is shrunk by heating to bundle the plural single-batteries 100.

One end of the positive electrode side lead 22 is connected to the positive electrode terminal 7 of the single-battery 100 located lowermost in the stack of the single-batteries 100. One end of the negative electrode side lead 23 is connected to the negative electrode terminal 6 of the single-battery 100 located uppermost in the stack of the single-batteries 100.

The printed wiring board 34 is provided along one face in the short side direction among the inner surfaces of the housing container 31. The printed wiring board 34 includes a positive electrode side connector 341, a negative electrode side connector 342, a thermistor 343, a protective circuit 344, wirings 345 and 346, an external power distribution terminal 347, a plus-side wiring 348a, and a minus-side wiring 348b. One principal surface of the printed wiring board 34 faces the surface of the battery module 200 from which the negative electrode terminals 6 and the positive electrode terminals 7 extend out. An unillustrated insulating plate is disposed in between the printed wiring board 34 and the battery module 200 .

The positive electrode side connector 341 is provided with a through hole. By inserting the other end of the positive electrode side lead 22 into the through hole, the positive electrode side connector 341 and the positive electrode side lead 22 become electrically connected. The negative electrode side connector 342 is provided with a through hole. By inserting the other end of the negative electrode side lead 23 into the through hole, the negative electrode side connector 342 and the negative electrode side lead 23 become electrically connected.

The thermistor 343 is fixed to one principal surface of the printed wiring board 34. The thermistor 343 detects the temperature of each single-battery 100 and transmits detection signals to the protective circuit 344.

The external power distribution terminal 347 is fixed to the other principal surface of the printed wiring board 34. The external power distribution terminal 347 is electrically connected to device(s) that exists outside the battery pack 300.

The protective circuit 344 is fixed to the other principal surface of the printed wiring board 34. The protective circuit 344 is connected to the external power distribution terminal 347 via the plus side wire 348a. The protective circuit 344 is connected to the external power distribution terminal 347 via the minus side wire 348b. In addition, the protective circuit 344 is electrically connected to the positive electrode side connector 341 via the wiring 345. The protective circuit 344 is electrically connected to the negative electrode side connector 342 via the wiring 346. Furthermore, the protective circuit 344 is electrically connected to each of the plural single-batteries 100 via the wires 35.

The protective sheets 33 are arranged on both inner surfaces of the housing container 31 along the long side direction and on the inner surface along the short side direction facing the printed wiring board 34 across the battery module 200. The protective sheets 33 are made of, for example, resin or rubber.

The protective circuit 344 controls charge and discharge of the plural single-batteries 100. The protective circuit 344 is also configured to cut-off electric connection between the protective circuit 344 and the external power distribution terminal 347 to external device (s), based on detection signals transmitted from the thermistor 343 or detection signals transmitted from each single-battery 100 or the battery module 200.

An example of the detection signal transmitted from the thermistor 343 is a signal indicating that the temperature of the single-battery(s) 100 is detected to be a predetermined temperature or more. An example of the detection signal transmitted from each single-battery 100 or the battery module 200 include a signal indicating detection of over charge, over discharge, and overcurrent of the single-battery(s) 100. When detecting over charge or the like for each of the single batteries 100, the battery voltage may be detected, or a positive electrode potential or negative electrode potential may be detected. In the latter case, a lithium electrode to be used as a reference electrode may be inserted into each single-battery 100.

Note that, as the protective circuit 344, a circuit included in a device (for example, an electronic device or an automobile) that uses the battery pack 300 as a power source may be used.

As described above, the battery pack 300 includes the external power distribution terminal 347. Hence, the battery pack 300 can output current from the battery module 200 to an external device and input current from an external device to the battery module 200 via the external power distribution terminal 347. In other words, when using the battery pack 300 as a power source, the current from the battery module 200 is supplied to an external device via the external power distribution terminal 347. When charging the battery pack 300, a charge current from an external device is supplied to the battery pack 300 via the external power distribution terminal 347. If the battery pack 300 is used as an onboard battery, the regenerative energy of the motive force of a vehicle can be used as the charge current from the external device.

Note that the battery pack 300 may include plural battery modules 200. In this case, the plural battery modules 200 may be connected in series, in parallel, or connected in a combination of in series connection and in parallel connection. The printed wiring board 34 and the wires 35 may be omitted. In this case, the positive electrode side lead 22 and the negative electrode side lead 23 may be used as the external power distribution terminal.

Such a battery pack is used, for example, in applications where excellent cycle performance is demanded when a large current is extracted. More specifically, the battery pack is used as, for example, a power source for electronic devices, a stationary battery, or an onboard battery for various vehicles. An example of the electronic device is a digital camera. The battery pack is particularly favorably used as an onboard battery.

The battery pack according to the fifth embodiment is provided with the secondary battery according to the third embodiment or the battery module according to the fourth embodiment. Thus, the battery pack has low resistance and exhibits excellent self-discharge performance.

[Examples]

Examples will be described hereinafter, but the embodiments are not limited to the examples described below.

(Example 1)

<Fabrication of Negative Electrode>

A slurry was prepared by mixing 96% by weight of lithium titanate as a negative electrode active material, 2% by weight of flake graphite as an electro-conductive agent, and 2% by weight of polyvinylidene fluoride as a binder, and adding N-methyl-2-pyrrolidone (NMP) thereto. The slurry was applied onto each of the obverse and reverse surfaces of a strip-shaped aluminum foil having a thickness of 12 $\mu$m and dried so that an uncoated portion was partially formed. Cutting was performed parallel to the long side to make the coated width 94 mm and the uncoated width 20 mm in the short side direction. Thereafter, the aluminum foil and the coating film were rolled with a roll press to prepare a negative electrode.

<Fabrication of Positive Electrode>

A slurry was prepared by mixing 92% by weight of lithium manganate as a positive electrode active material, 5% by weight of acetylene black as an electro-conductive agent, and 3% by weight of polyvinylidene fluoride as a binder, and adding NMP thereto. The slurry was applied onto each of the obverse and reverse surfaces of a strip-shaped aluminum foil having a thickness of 12 um and dried so that an uncoated portion was partially formed. Cutting was performed parallel to the long side to make the coated width 90 mm and the uncoated width 25 mm in the short side direction. Thereafter, the aluminum foil and the coating film were rolled with a roll press to prepare a positive electrode. Adjustment was performed so as to make the film thickness of the positive electrode active material-containing layer be 30 um after pressing.

<Formation of Porous Layer>

A slurry was prepared by mixing 97% by weight of lithium titanate having an average particle diameter of 0.8 $\mu$m as inorganic particles and 3% by weight of polyvinylidene fluoride as a binder, and adding NMP thereto. The slurry was applied so as to cover the principal surface of the positive electrode active material-containing layer, and also to span from that principal surface over to the uncoated portion of the positive electrode current collector, covering the uncoated portion of the positive electrode current collector at a width of 5 mm. The coating film was dried, cut, and then rolled by a roll press to obtain a positive electrode in which a porous layer was integrally formed. The film thickness of the porous layer was adjusted to be 1.0 $\mu$m after pressing.

<Fabrication of Wound Electrode Group>

As the separator, a belt-shaped non-woven fabric having a thickness of 15 $\mu$m was prepared. Then, as described with reference to FIG. 5, the separator, the negative electrode, and the positive electrode were stacked, and these sheets were wound so that the direction parallel to the short side direction of these sheets served as the winding axis, thereby fabricating an electrode group.

<Preparation of Nonaqueous Electrolyte>

An electrolyte solution was prepared by dissolving lithium hexafluorophosphate in a solution containing 30 vol% of propylene carbonate and 70 vol% of diethyl carbonate so that the concentration became 1.5 mol/L.

<Fabrication of Secondary Battery>

The periphery of the electrode group was covered with an aluminum-based laminate film serving as a container member, and the periphery except for some parts was thermally fused. The electrolyte solution was poured in from some of the parts not thermally fused in such an amount that the electrode group was entirely immersed. Thereafter, the portions that had not been thermally fused were thermally fused to seal the electrode group and the electrolyte solution, thereby fabricating a secondary battery.

(Example 2)

A secondary battery was fabricated in the same manner as in Example 1, except that the pressing pressure was reduced at the time of forming the porous layer.

(Example 3)

A secondary battery was fabricated in the same manner as in Example 1, except that the pressing pressure was increased at the time of fabricating the positive electrode.

(Example 4)

A secondary battery was fabricated in the same manner as in Example 1, except that the weight per unit area was changed at the time of forming the porous layer so that the film thickness after pressing was 0.5 $\mu$m.

(Example 5)

A secondary battery was fabricated in the same manner as in Example 1, except that the weight per unit area was changed at the time of forming the porous layer so that the film thickness after pressing was 2.0 $\mu$m.

(Example 6)

A secondary battery was fabricated in the same manner as in Example 1, except that the weight per unit area was changed at the time of forming the porous layer so that the film thickness after pressing was 3.0 $\mu$m.

(Example 7)

A secondary battery was fabricated in the same manner as in Example 1, except that titanium dioxide having an average particle size of 0.6 $\mu$m was used as the inorganic particles instead of lithium titanate at the time of forming the porous layer.

(Example 8)

A secondary battery was fabricated in the same manner as in Example 1, except that artificial graphite was used as the negative electrode active material instead of lithium titanate.

(Example 9)

A secondary battery was fabricated in the same manner as in Example 1, except that a belt-shaped nonwoven fabric having a thickness of 25 $\mu$m was used as the separator.

(Comparative Example 1)

A secondary battery was fabricated in the same manner as in Example 1, except that the forming of the porous layer was omitted.

(Comparative Example 2)

A secondary battery was fabricated in the same manner as in Example 1, except that the weight per unit area was changed at the time of forming the porous layer so that the film thickness after pressing was 5.0 $\mu$m.

(Comparative Example 3)

A secondary battery was fabricated in the same manner as in Example 1, except that a wound electrode group was fabricated in the following manner.
First, a negative electrode and a positive electrode were fabricated in the same manner as in Example 1. However, a porous layer was not formed during the fabrication of the positive electrode. Next, two belt-shaped separators each having a 5.0 $\mu$m alumina particle layer supported on a 15 um-thick non-woven fabric were prepared. The two separators were stacked onto both surfaces of the positive electrode so that each of the alumina particle layers was respectively in contact with each of the positive electrode active material-containing layer, and the negative electrode was further stacked onto one of the separators. These stacked sheets were wound in such a manner that the direction parallel to the short side direction thereof served as the winding axis, thereby fabricating a wound electrode group.

<Measurement of Layer Thickness>

For the positive electrode included in the secondary battery fabricated in each example, the layer thicknesses of each of the positive electrode active material-containing layer and the porous layer were measured in accordance with the method described in the first embodiment. The results are shown in Table 1 below.

<Adjustment of Charging State>

The secondary battery fabricated in each example was charged for 10 hours under the conditions of a constant current of 0.2 A and a constant voltage of 2.7 V in an environment of 25°C, and then discharged under the conditions of a constant current of 0.2 A and a cutoff voltage of 1.5 V in an environment of 25°C. Next, in an environment of 25°C, charging was performed by an amount corresponding to 50% of the discharge amount under the condition of 0.2 A. Thus, the SOC of the secondary battery was adjusted to 50%.

<Resistance Measurement>

The direct current resistance of the secondary battery whose SOC was adjusted to 50% was measured in an environment at 25°C. The results are shown in Table 1 below.

<Measurement of Self-Discharge Capacity>

The secondary battery whose SOC was adjusted to 100% was left in an environment of 65°C for one week, and the self-discharge capacities during this period were calculated.

<Measurement of Pore Diameter Distribution>

For the secondary battery prepared in each example, mercury porosimetry was performed according to the method described in the first embodiment, and a mode diameter X in a log differential pore volume distribution curve obtained by mercury intrusion porosimetry for the positive electrode active material-containing layer and the porous layer and a mode diameter Y in a log differential pore volume distribution curve obtained by mercury intrusion porosimetry for the positive electrode active material-containing layer were calculated. The results are shown in Table 1 below. In Comparative Example 3, since the porous layer was not directly stacked onto the positive electrode active material-containing layer, the mode diameter Y could not be appropriately measured. Therefore, no pore size distribution was measured for Comparative Example 3. In Table 1 below, the column of the thickness of the porous layer according to Comparative Example 3 shows the thickness of the alumina particle layer.

The results of the pore diameter distribution measurement according to Example 1 are shown in FIG. 13. In the log differential pore volume distribution curve shown in FIG. 13, the horizontal axis represents the pore diameter [$\mu$m] and the vertical axis represents the log differential intrusion [mL/g]. In the graph shown in FIG. 13, the log differential pore volume distribution curve of the positive electrode active material-containing layer and the porous layer is indicated by a solid line, and the log differential pore volume distribution curve of the positive electrode active material-containing layer is indicated by a broken line. The log differential pore volume distribution curve for the positive electrode active material-containing layer and the porous layer had a peak PX with the highest abundance ratio, and the mode diameter X corresponding to the position of the peak top of the peak PX was 0.510 $\mu$m. The log differential pore volume distribution curve of the positive electrode active material-containing layer had a peak PY with the highest abundance ratio, and the mode diameter Y corresponding to the position of the peak top of the peak PY was 0.405 $\mu$m. Therefore, the ratio X/Y of the mode diameter X to the mode diameter Y was 1.26.

[Table 1]

| Table 1 | Inorganic particles | Negative electrode active material | Thickness (μm) | | | Mode diameter (μm) | | Ratio X/Y | Resistance [m Ω] | Self-discharge capacity [mAh] |
|---|---|---|---|---|---|---|---|---|---|---|
| | | | Positive electrode active material-containing layer | Porous layer | Separator | X | Y | | | |
| Example 1 | Lithium titanate | Lithium titanate | 20 | 1.0 | 15 | 0.510 | 0.405 | 1.26 | 6.29 | 19.0 |
| Example 2 | Lithium titanate | Lithium titanate | 20 | 1.0 | 15 | 0.453 | 0.415 | 1.09 | 6.31 | 16.6 |
| Example 3 | Lithium titanate | Lithium titanate | 20 | 1.0 | 15 | 0.544 | 0.368 | 1.48 | 6.18 | 20.1 |
| Example 4 | Lithium titanate | Lithium titanate | 20 | 0.5 | 15 | 0.531 | 0.405 | 1.31 | 6.28 | 19.5 |
| Example 5 | Lithium titanate | Lithium titanate | 20 | 2.0 | 15 | 0.542 | 0.405 | 1.34 | 6.31 | 18.7 |
| Example 6 | Lithium titanate | Lithium titanate | 20 | 3.0 | 15 | 0.599 | 0.405 | 1.48 | 6.42 | 15.0 |
| Example 7 | Titanium dioxide | Lithium titanate | 20 | 1.0 | 15 | 0.513 | 0.41 | 1.25 | 6.33 | 19.5 |
| Example 8 | Lithium titanate | Artificial graphite | 20 | 1.0 | 15 | 0.510 | 0.405 | 1.26 | 6.14 | 20.1 |
| Example 9 | Lithium titanate | Lithium titanate | 20 | 1.0 | 25 | 0.510 | 0.405 | 1.26 | 6.87 | 12.2 |
| Comparative Example 1 | - | Lithium titanate | 20 | 0 | 15 | - | - | 1.0 | 6.25 | 21.0 |
| Comparative Example 2 | Lithium titanate | Lithium titanate | 20 | 5.0 | 15 | 0.628 | 0.405 | 1.55 | 6.98 | 12.3 |
| Comparative Example 3 | Alumina | Lithium titanate | 20 | 5.0 | 15 | - | - | - | 6.89 | 12.7 |

As shown in Examples 1 to 9, it is recognized that when the thickness of the porous layer is 3.0 $\mu$m or less and the ratio X/Y satisfies 1.0 < X/Y < 1.5 ... (1), both low resistance and suppression of self-discharge can be achieved. Examples 1 and 4 to 6 are cases for which the thickness of the porous layer was changed within a range of 0.5 $\mu$m to 3.0 $\mu$m. In each of these examples, since the ratio X/Y satisfied Equation 1, even when the thickness of the porous layer was appropriately changed, a secondary battery with low resistance and suppressed self-discharge was obtained. As shown in Examples 1 to 3, when the ratio X/Y is increased without changing the thickness of the porous layer, the battery resistance tends to decrease, but the self-discharge capacity increases accordingly. It is considered that even if the mode diameter Y for the active material-containing layer is small, in other words, even if the active material-containing layer includes a large number of fine pores, with a large mode diameter X for the state of having the porous layer stacked, the self-discharge capacity increases since lithium ions easily pass through the porous layer.

As shown in Examples 7 and 8, in a secondary battery including the positive electrode having a thickness of 3.0 um or less and having the ratio X/Y satisfying Equation 1, even when the species of the inorganic particles or the species of the negative electrode active material is changed, the direct current resistance was low, and the self-discharge had been successfully suppressed significantly. Regarding Example 5 in which artificial graphite was used as the negative electrode active material, it is considered that the self-discharge capacity was large as compared to the other Examples, since the negative electrode operating potential was low. In Example 6 in which the separator thickness was changed to 25 um, the self-discharge capacity had been successfully reduced as compared to the other Examples, but the direct current resistance was of a relatively high value. When the thickness of the porous layer is 3.0 um or less as in Examples 1 to 9, although not shown in Table 1, the volume occupied by the porous layer with respect to the volumetric capacity of the container member of the battery can be reduced, and thus there is an advantage wherein the battery capacity can be further increased.

In Comparative Example 1 in which the formation of the porous layer was omitted, the direct current resistance was about the same as that of Example 1 or the like, but the self-discharge performance was inferior. In Comparative Example 2 in which the thickness of the porous layer was more than 3.0 $\mu$m and the ratio X/Y was greater than 1.5, the porous layer was thick, and thus the self-discharge performance was excellent. Since the mode diameter X of Comparative Example 2 was large, it can be determined that the porous layer included relatively many pores having a large pore diameter, but it is considered that the direct current resistance was large because the migration distance of lithium ions was long.

In Comparative Example 3, no porous layer was directly stacked on the positive electrode active material-containing layer. Instead, the alumina particle layer supported on the separator surface was in contact with the positive electrode active material-containing layer. The thickness of the alumina particle layer was 5.0 $\mu$m. Looking at Examples 1 to 8 and Comparative Example 3 wherein the separator thickness is 15 pm, Comparative Example 3 tended to exhibit excellent self-discharge performance but inferior battery resistance.

According to at least one embodiment and example described above, a positive electrode is provided. The positive electrode includes a positive electrode current collector, a positive electrode active material-containing layer provided on the positive electrode current collector, and a porous layer provided on at least a part of the positive electrode active material-containing layer and containing inorganic particles. A thickness of the porous layer is 3.0 $\mu$m or less. A ratio X/Y, between a mode diameter X in a log differential pore volume distribution curve obtained by mercury porosimetry with respect to the positive electrode active material-containing layer and the porous layer, and a mode diameter Y in a log differential pore volume distribution curve obtained by mercury porosimetry with respect to the positive electrode active material-containing layer, satisfies the following Equation 1:

$$1.0 < X/Y < 1.5 \quad . \; . \; . \quad (1)$$

The positive electrode according to the embodiment can realize low battery resistance by virtue of satisfying Equation 1, while suppressing self-discharge by virtue of the porous layer containing inorganic particles.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

REFERENCE SIGNS LIST

1. electrode group, 2. container member, 3. negative electrode, 3a. negative electrode current collector, 3b. negative electrode active material-containing layer, 3c. negative electrode current collecting tab, 4. separator, 5. positive electrode, 5a. positive electrode current collector, 5b. positive electrode active material-containing layer, 6. negative electrode terminal, 7. positive electrode terminal, 8. porous layer, 21. bus bar, 22. positive electrode-side lead, 23. negative electrode-side lead, 24. adhesive tape, 31. housing container, 32. lid, 33. protective sheet, 34. printed wiring board, 35. wires, 100. secondary battery, 200. battery module, 300. battery pack, 341. positive electrode side connector, 342. negative electrode side connector, 343. thermistor, 344. protective circuit, 345. wiring, 346. wiring, 347. external energizing terminal, 348a. plus-side wiring, 348b. minus-side wiring.

**Claims**

1. A positive electrode comprising:

   a positive electrode current collector;
   a positive electrode active material-containing layer provided on the positive electrode current collector; and
   a porous layer provided on at least a part of the positive electrode active material-containing layer and containing inorganic particles;
   a thickness of the porous layer being 3.0 $\mu$m or less, and
   a ratio X/Y, between a mode diameter X in a log differential pore volume distribution curve obtained by mercury porosimetry with respect to the positive electrode active material-containing layer and the porous layer, and a mode diameter Y in a log differential pore volume distribution curve obtained by mercury porosimetry with respect to the positive electrode active material-containing layer, satisfying the following Equation 1:

$$1.0 < X/Y < 1.5 \quad . \quad . \quad . \quad (1).$$

2. The positive electrode according to claim 1, wherein the average particle size (D50) of the inorganic particles is within a range from 0.1 $\mu$m to 3.0 $\mu$m.

3. The positive electrode according to claim 1 or 2, wherein the inorganic particles are at least one selected from the group consisting of aluminum oxide, titanium oxide, magnesium oxide, zinc oxide, lithium titanate, titanium hydroxide, barium titanate, iron oxide, silicon oxide, aluminum hydroxide, gibbsite, boehmite, bayerite, zirconium oxide, magnesium hydroxide, silica, barium titanate, lithium tetraborate, lithium tantalate, mica, silicon nitride, aluminum nitride, and zeolite.

4. The positive electrode according to any one of claims 1 to 3, wherein the porous layer further contains a binder, and a proportion of a mass of the inorganic particles accounting for a mass of the porous layer is within a range of 50 mass% to 100 mass%.

5. The positive electrode according to any one of claims 1 to 4, wherein the ratio X/Y is 1.20 or more.

6. The positive electrode according to any one of claims 1 to 5, wherein a thickness of the positive electrode active material-containing layer is within a range of 5 um to 100 um.

7. An electrode group comprising:

   the positive electrode according to any one of claims 1 to 6;
   a negative electrode; and
   a separator in contact with the porous layer and interposed between the positive electrode and the negative electrode.

8. The electrode group according to claim 7, wherein a thickness of the separator is within a range of 5 $\mu$m to 30 $\mu$m.

9. The electrode group according to claim 7 or 8, wherein the negative electrode comprises a negative electrode active material-containing layer containing a negative electrode active material, and
the negative electrode active material contains at least one titanium-containing oxide selected from the group consisting of titanium oxide, lithium-titanium composite oxide, niobium-titanium composite oxide, and sodium-niobium-titanium composite oxide.

10. A secondary battery comprising:

the electrode group according to any one of claims 7 to 9; and
an electrolyte.

11. A battery pack comprising the secondary battery according to claim 10.

12. The battery pack according to claim 10 or 11, comprising plural of the secondary battery, the secondary batteries being electrically connected in series, in parallel, or in combination of in-series connection and in-parallel connection.

F I G. 1

F I G. 2

F I G. 3

F I G. 4

F I G. 5

F I G. 6

F I G. 7

F I G. 8

F I G. 9

FIG. 10

F I G. 11

F I G. 12

F I G. 13

**INTERNATIONAL SEARCH REPORT**

| International application No. |
| --- |
| PCT/JP2021/010387 |

A.    CLASSIFICATION OF SUBJECT MATTER
H01M 4/13(2010.01)i; H01M 4/485(2010.01)i; H01M 10/052(2010.01)i; H01M
50/434(2021.01)i; H01M 50/443(2021.01)i; H01M 50/446(2021.01)i; H01M
50/489(2021.01)i
FI:     H01M4/13; H01M10/052; H01M4/485; H01M50/434; H01M50/443 M;
        H01M50/446; H01M50/489

According to International Patent Classification (IPC) or to both national classification and IPC

B.    FIELDS SEARCHED

Minimum documentation searched (classification system followed by classification symbols)
H01M4/13; H01M4/485; H01M10/052; H01M50/434; H01M50/443; H01M50/446;
H01M50/489

Documentation searched other than minimum documentation to the extent that such documents are included in the fields searched
Published examined utility model applications of Japan          1922-1996
Published unexamined utility model applications of Japan        1971-2021
Registered utility model specifications of Japan               1996-2021
Published registered utility model applications of Japan        1994-2021

Electronic data base consulted during the international search (name of data base and, where practicable, search terms used)

C.    DOCUMENTS CONSIDERED TO BE RELEVANT

| Category* | Citation of document, with indication, where appropriate, of the relevant passages | Relevant to claim No. |
| --- | --- | --- |
| X | JP 2017-224496 A (TOSHIBA CORP) 21 December 2017 (2017-12-21) claim 1, paragraphs [0042]-[0054], [0077]-[0091], table 1, fig. 9 | 1-12 |
| A | JP 2015-170578 A (TOSHIBA CORP) 28 September 2015 (2015-09-28) paragraph [0017] | 1-12 |
| A | JP 10-241656 A (ASAHI CHEM IND CO LTD) 11 September 1998 (1998-09-11) claim 1, paragraph [0021] | 1-12 |

☐ Further documents are listed in the continuation of Box C.    ☒ See patent family annex.

| | |
| --- | --- |
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| 18 May 2021 (18.05.2021) | 01 June 2021 (01.06.2021) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
| --- | --- |

Form PCT/ISA/210 (second sheet) (January 2015)

INTERNATIONAL SEARCH REPORT

Information on patent family members

International application No.

PCT/JP2021/010387

| Patent Documents referred in the Report | Publication Date | Patent Family | Publication Date |
|---|---|---|---|
| JP 2017-224496 A | 21 Dec. 2017 | (Family: none) | |
| JP 2015-170578 A | 28 Sep. 2015 | US 2016/0380257 A1 paragraph [0020] WO 2015/137138 A1 EP 3118913 A1 CN 105981199 A | |
| JP 10-241656 A | 11 Sep. 1998 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6602050 B
- JP 6094840 B
- JP 5035650 B

- JP 4847861 B
- JP 4667242 B

### Non-patent literature cited in the description

- **GENJ I JINBO et al.** Handbook of Microparticles. Asakura Shoten, 01 September 1991, 151-152
- **SOHACHIRO HAYAKAWA.** Powder Physical Property Measurement Methods. Asakura Shoten, 15 October 1973, 257-259

- **GENJ I JIMBO et al.** Handbook of Microparticles. Asakura Shoten, 1991
- **SOHACHIRO HAYAKAWA.** Powder Physical Property Measurement Methods. Asakura Shoten, 1978